# EUROPÄISCHE PATENTSCHRIFT

(11) **EP 2 173 011 B1**
(45) Veröffentlichungstag und Bekanntmachung des Hinweises auf die Patenterteilung: **08.01.2014**
(21) Anmeldenummer: 09171935.1
(22) Anmeldetag: 01.10.2009
(51) Int. Cl.: H01M 2/20, H01M 2/26, H01R 4/48

(54) **Vorrichtung zur elektrischen Verbindung von Zellableitern**
Electrical connection device for cell terminals
Dispositif de liaison électrique de terminaux de cellules

(30) Priorität: 01.10.2008 DE 102008049852
(43) Veröffentlichungstag der Anmeldung: 07.04.2010
(73) Patentinhaber: Behr GmbH & Co. KG, 70469 Stuttgart (DE)
(72) Erfinder: Steinbach, Martin, 71336 Waiblingen (DE); Schiehlen, Thomas, 89174 Altheim (DE)
(74) Vertreter: Grauel, Andreas

(56) Entgegenhaltungen:
- EP-A2- 1 445 815
- WO-A1-2006/046585
- WO-A1-2006/059434
- US-A1- 2002 061 438

## Beschreibung

Die vorliegende Erfindung bezieht sich auf eine Vorrichtung zur elektrischen Verbindung von Zellableitern und insbesondere von Batteriezellenableitern.

Batteriezellen, die beispielsweise im Fahrzeug eingesetzt werden, weisen Zellableiter auf. Zur Kontaktierung der Batterie wird zwischen den Zellableitern eine elektrische Verbindung benötigt. Elektrische Verbinder werden meist als zylindrische Verbinder ausgeführt, die für Zellableiter nicht geeignet sind. Die EP 0 836 242 A1 beschreibt eine Klemmverbindung mit einer Klemmschraube. Aufgrund der durch die Klemmschraube auftretenden Belastung des Ableiters ist eine solche Klemmverbindung für Zellableiter ungeeignet.

Weiterhin ist eine Verbindung der Ableiter durch Schweißen, Schrauben, Nieten oder gegebenenfalls durch Kleben möglich. Das Verschweißen hat den Nachteil, dass eine Temperatureinbringung stattfindet. Dies sollte vermieden werden, um die Zellen nicht zu beschädigen. Die Verschraubung verursacht einen erhöhten Montageaufwand. Das Nieten hat ebenfalls einen erhöhten Montageaufwand zur Folge. Kleben eignet sich aufgrund der isolierenden Wirkung von Kunststoffen nur bedingt, ist aber durch spezielle Klebstoffe möglich. Bis auf die Schraubverbindung zählen diese Fügeverfahren zu den nichtwiederlösbaren Verbindungstechniken.

Es ist die Aufgabe der vorliegenden Erfindung eine verbesserte Vorrichtung zur elektrischen Verbindung von Zellableitern zu schaffen.

Diese Aufgabe wird durch eine Vorrichtung gemäß Anspruch 1 gelöst.

Der vorliegenden Erfindung liegt die Erkenntnis zugrunde, dass eine bestehende Form der Zellableiter vorausgesetzt und ausgenutzt werden kann, um eine elektrische Verbindung zwischen Zellableitern zu schaffen.

Vorteilhafterweise ermöglicht die erfindungsgemäße Verbindungsklemme eine schnelle und wirtschaftliche Verbindung zweier Ableiter. Dazu ist kein spezielles Werkzeug notwendig. Zudem erfolgt weder bei der Herstellung der elektrischen Verbindung noch bei der bestehenden Verbindung eine Belastung der Ableiter. Vorteilhafterweise kann die Verbindung der Ableiter eine wiederlösbare Verbindung darstellen. Die Verbindungselemente der Verbindungsklemme passen spezifisch auf die Ableiter, die im Regelfall nicht geändert werden.

Die vorliegende Erfindung schafft eine Vorrichtung zur elektrischen Verbindung von Zellableitern, mit folgenden Merkmalen: einem ersten Kontaktelement mit einer ersten Führungseinrichtung und einer zweiten Führungseinrichtung, wobei die erste Führungseinrichtung ausgebildet ist, um an einem ersten Zellableiter anzuliegen und die zweite Führungseinrichtung ausgebildet ist, um an einem zweiten Zellableiter anzuliegen; und einem zweiten Kontaktelement mit mindestens einer ersten Halteeinrichtung und mindestens einer zweiten Halteeinrichtung, wobei die mindestens eine erste Halteeinrichtung ausgebildet ist, um die erste Führungseinrichtung und den ersten Zellableiter zu umschließen und die mindestens eine zweite Halteeinrichtung ausgebildet ist, um die zweite Führungseinrichtung und den ersten Zellableiter zu umschließen.

Bei den Zellableitern kann es sich um Ableiter von galvanischen Zellen und insbesondere um Batteriezellenableiter handeln. Durch das Anliegen der Führungseinrichtungen an den Zellableitern entsteht ein elektrischer Kontakt zwischen den Führungseinrichtungen und den Zellableitern. Die Halteeinrichtungen umschließen die Führungseinrichtungen und die Zellableiter, so dass die Führungseinrichtungen und die Zellableiter zusammengepresst werden. Somit kann eine sicherere elektrische Kontaktierung zwischen den Zellableitern und den Führungseinrichtungen sowie den Halteeinrichtungen gewährleistet werden.

Das zweite Kontaktelement weist ein Flächenstück auf, das zwischen den Zellableitern angeordnet werden kann und die mindestens eine erste Halteeinrichtung und die mindestens eine zweite Halteeinrichtung sind an gegenüberliegenden Seiten des Flächenstücks angeordnet. Ein solches Kontaktelement ist einfach und kostengünstig herzustellen und ermöglicht eine mechanisch stabile Verbindung zwischen den Zellableitern.

Die Halteeinrichtungen können jeweils als umgebogene Endstücke des zweiten Kontaktelements ausgebildet sein. Die umgebogenen Endstücke können somit jeweils einen Falz bilden, der eine einfach herzustellende und dennoch wiederlösbare Verbindung ermöglicht. Dabei können die umgebogenen Endstücke ausgebildet sein, um gegenüber den Zellableitern eine Schrägung zwischen 3° und 7° aufzuweisen. Mittels der Schräglage kann eine verbesserte Klemmverbindung zwischen Zellableitern, Führungseinrichtungen und Halteeinrichtungen geschaffen werden.

Das erste Kontaktelement weist eine Aussparung auf, in die das Flächenstück des zweiten Kontaktelements eingeführt werden kann. Somit können das erste und das zweite Kontaktelement bei der Montage ineinander gesetzt werden.

Erfindungsgemäß sind die Führungseinrichtungen jeweils als Schienen ausgebildet, die parallel zu den Zellableitern ausgerichtet sind. Die Schienen ermöglichen eine Ausrichtung der Vorrichtung an den Zellableitern Zudem ermöglichen die Schienen eine elektrische Kontaktierung der Zellableiter.

Die Führungseinrichtungen sind ausgebildet, um jeweils beide an einer Außenseite oder jeweils an einer Innenseite der Zellableiter anzuliegen. Somit kann eine platzsparende Verbindung geschaffen werden.

Die Vorrichtung kann ein Verbindungselement zum Bereitstellen einer beweglichen Verbindung zwischen den Kontaktelementen aufweisen, wobei das Verbindungselement eine erste Stellung und eine zweite Stellung der Kontaktelemente zueinander ermöglicht, wobei die Halteeinrichtungen die Führungseinrichtungen und die Zellableiter in der ersten Stellung nicht umschließen und in der zweiten Stellung umschließen. Somit kann die Vorrichtung zur Montage in einer aufgeklappten Stellung auf die Zellableiter aufgesetzt werden. Anschließend kann die Vorrichtung zugeklappt werden, um eine feste Verbindung zu den Zellableitern herzustellen. Beispielsweise kann das Verbindungselement ein Filmscharnier sein. Ein Filmscharnier ist kostengünstig herzustellen.

Ferner kann die Vorrichtung einen im Bereich des Verbindungselements angeordneten Fortsatz aufweisen, der sich von den Kontaktelementen weg erstreckt. Der Fortsatz kann die Handhabung der Vorrichtung erleichtern und zur elektrischen Kontaktierung geeignet sein.

Auch kann die Vorrichtung eine Verschlusseinrichtung aufweisen, die ausgebildet ist, um eine feste Verbindung zwischen den Kontaktelementen bereitzustellen, wenn die Halteeinrichtungen die Führungseinrichtungen und die Zellableiter umschließen. Somit kann eine sichere Verbindung der Zellableiter gewährleistet werden. Beispielsweise kann die Verschlusseinrichtung ein erstes Verschlusselement aufweisen, das an dem ersten Kontaktelement angeordnet ist und ein zweites Verschlusselement aufweisen, das an dem zweiten Kontaktelement angeordnet ist und das erste und das zweite Verschlusselement können ausgebildet sind, um eine Klemmverbindung zwischen den Kontaktelementen bereitzustellen. Somit kann die feste Verbindung durch Verrasten der Kontaktelemente hergestellt werden. Vorteilhafterweise kann eine solche Verbindung auf einfache Weise wieder gelöst werden.

Bevorzugte Ausführungsbeispiele der vorliegenden Erfindung werden nachfolgend Bezug nehmend auf die beiliegenden Zeichnungen näher erläutert. Es zeigen:
- Fig. 1: eine Darstellung von Batteriezellen mit einer erfindungsgemäßen Vorrichtung;
- Fig. 2: eine Darstellung der erfindungsgemäßen Vorrichtung;
- Fig. 3: eine Darstellung der erfindungsgemäßen Vorrichtung von oben;
- Fig. 4: eine Darstellung der erfindungsgemäßen Vorrichtung von unten;
- Fig. 5: eine weitere Darstellung der erfindungsgemäßen Vorrichtung;
- Fig. 6: eine Darstellung der erfindungsgemäßen Verschlusseinrichtung;
- Fig. 7: eine Darstellung der erfindungsgemäßen Verbindungseinrichtung; und
- Fig. 8: eine Darstellung eines Schnitts der erfindungsgemäßen Vorrichtung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

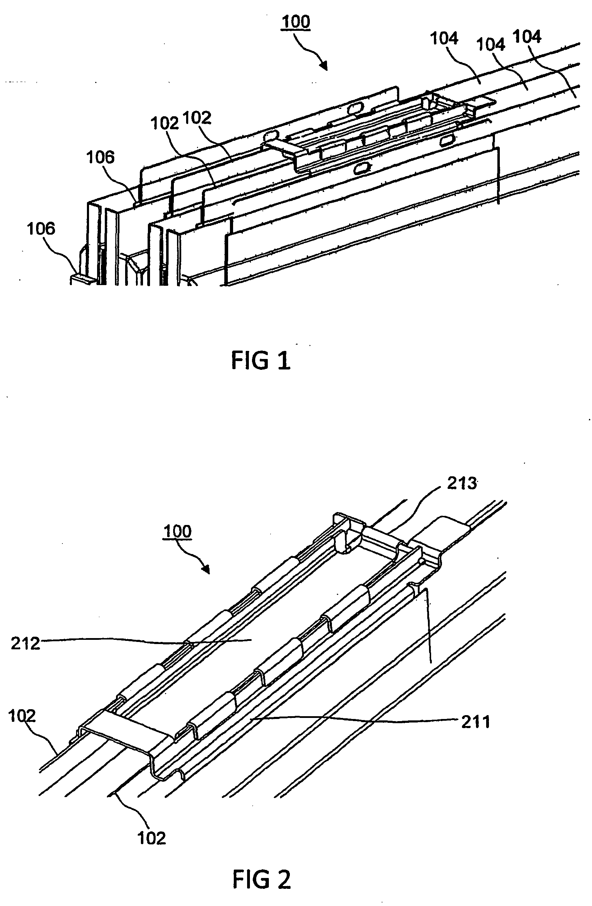

Fig. 1 zeigt eine Vorrichtung 100 zur elektrischen Verbindung von Zellableitern 102 gemäß einem Ausführungsbeispiel der vorliegenden Erfindung. Bei den Zellableitern 102 kann es sich um Batteriezellableitern einer Mehrzahl von Batteriezellen 104 handeln. Die Batteriezellen 104 können an Kühlblechen 106 befestigt sein, die ihrerseits auf einer Kühlplatte in einem gleichmäßigen Raster angeordnet sein können.

Die Zellableiter 102 sind als parallel angeordnete Platten ausgebildet. Die Vorrichtung 100 bildet eine Kontaktschiene, die auf einer den Batteriezellen 104 gegenüberliegende Seite der Zellableiter 102 aufgesetzt werden kann. Die Vorrichtung 100 stellt eine direkte Verbindung zweier Batteriezellenableiter 102 dar.

Fig. 2 zeigt eine detaillierte Darstellung der Vorrichtung 100 zur elektrischen Verbindung von Zellableitern 102. Die Vorrichtung 100 weist ein erstes Kontaktelement 211 und ein zweites Kontaktelement 212 auf. Das erste Kontaktelement 211 und das zweite Kontaktelement 212 sind über eine Verbindungseinrichtung 213 beweglich miteinander verbunden. Somit kann die Vorrichtung 100 zur Montage in einer aufgeklappten Stellung auf die Zellableiter 102 aufgesetzt werden. Anschließend können die Kontaktelement 211, 212 der Vorrichtung 100 zusammengeklappt werden, um eine feste Verbindung zu den Zellableitern 102 herzustellen.

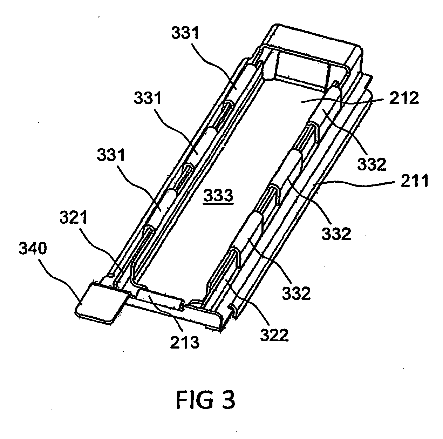

Fig. 3 zeigt eine Ansicht der Vorrichtung 100 von oben. Die Vorrichtung 100 weist das erste Kontaktelement 211 und das zweite Kontaktelement 212 auf.

Das erste Kontaktelement 211 weist eine erste Führungseinrichtung 321 und eine zweiten Führungseinrichtung 322 auf. Die Führungseinrichtungen 321, 322 sind jeweils als Schienen ausgebildet, die parallel zu den Zellableitern ausgerichtet sind. In einem montierten Zustand können die Führungseinrichtungen 321, 322 längs zu den Endbereichen der Zellableiter verlaufen und seitlich an den Zellableitern anliegen. Dabei kann die erste Führungseinrichtung 321 in direktem Kontakt zu einem ersten Zellableiter und die zweite Führungseinrichtungen 322 in direktem Kontakt zu einem benachbarten zweiten Zellableiter stehen. Dazu können die Führungseinrichtungen 321, 322 jeweils an Außenseite der Zellableiter angeordnet sein. Auch ist eine Anordnung der Führungseinrichtungen 321, 322 jeweils an einer Innenseite der Zellableiter möglich.

Das zweite Kontaktelement 212 kann eine Mehrzahl erster Halteeinrichtungen 331 und eine Mehrzahl zweiter Halteeinrichtungen 332 aufweisen. Die ersten Halteeinrichtungen 331 sind parallel zu der ersten Führungseinrichtung 321 und die zweiten Halteeinrichtungen 332 sind parallel zu der zweiten Führungseinrichtung 322 ausgerichtet. Ferner weist das zweite Kontaktelement 212 ein Flächenstück 333 auf. Die ersten und zweiten Halteeinrichtungen 331, 332 sind an gegenüberliegenden Seiten des Flächenstücks 333 angeordnet. Gemäß diesem Ausführungsbeispiel sind die Halteeinrichtungen 331, 332 jeweils als nach außen umgebogene Endstücke des Flächenstücks 333 ausgebildet. Das erste Kontaktelement 211 weist eine Aussparung auf, in die das Flächenstück 333 des zweiten Kontaktelement 212 eingeführt werden kann, wie es in Fig. 3 gezeigt ist. In diesem Zustand kann die erste Führungseinrichtung 321 und der erste Zellableiter in die erste Halteeinrichtungen 331 und die zweite Führungseinrichtung 321 und der zweite Zellableiter in die zweite Halteeinrichtungen 331 eingeführt werden.

Gemäß diesem Ausführungsbeispiel weist die Vorrichtung 100 ferner eine Fahne 340 zur besseren Handhabung und zur Kontaktierung auf. Die Fahne kann als flächenförmiger Fortsatz des ersten Kontaktelements 211 ausgebildet sein, und sich in Richtung des ersten Zellableiters erstrecken. Die Fahne 340 kann neben der Verbindungseinrichtung 213 angeordnet sein.

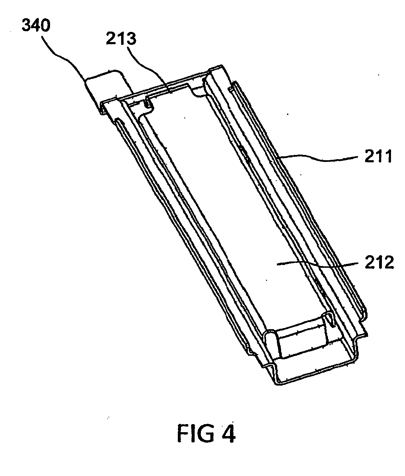

Fig. 4 zeigt eine Ansicht der Vorrichtung 100 von unten. Die Vorrichtung 100 weist das erste Kontaktelement 211 und das zweite Kontaktelement 212 auf.

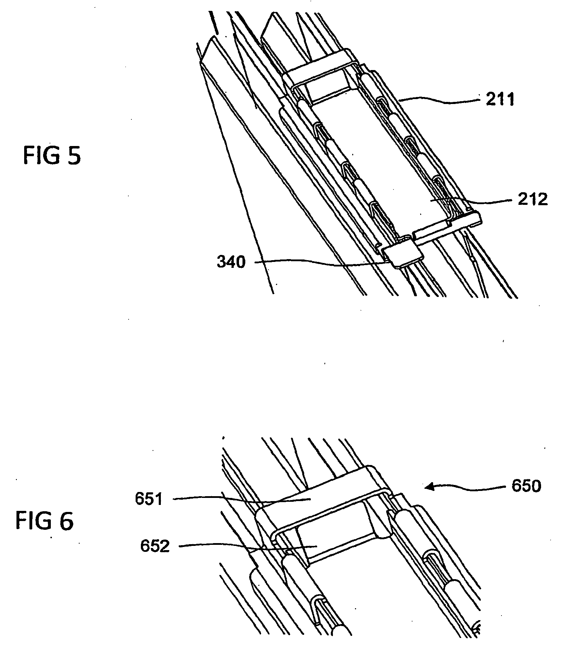

Fig. 5 zeigt eine weitere Darstellung der Vorrichtung 100. Die Kontaktelemente oder Verbindungselemente 211, 212 bestehen aus einem gut elektrisch leitendem Material wie Gold, Silber, Aluminium, Kupfer, kupferbeschichtetes Aluminium o.ä. Die Verbindungselemente 211, 212 können eine Dicke von 0,1 - 3mm aufweisen und beispielsweise aus Blech geschnitten sein. In dem Blechzuschnitt befinden sich Aussparungen, die im Anschluss an den Zuschnitt umgebogen werden.

Das Ableiterverbindungselement 212 kann Aussparungen in der Größenordnung von 5-15mm Breite aufweisen. Die Fahne 340 an der Oberseite kann in etwa 6mm breit und 8,5mm lang sein. Die Fahne 340 kann zur besseren Handhabe und zur Kontaktierung einer CSC-Platine dienen.

Die Gesamtlänge dieses Verbindungelementes ist nicht begrenzt und kann bei einer Vergrößerung der Ableiter 102 angepasst werden.

Fig. 6 zeigt eine Darstellung eines Abschnitts der erfindungsgemäßen Vorrichtung mit einer Verschlusseinrichtung 650, gemäß einem Ausführungsbeispiel der vorliegenden Erfindung. Die Verschlusseinrichtung 650 kann an einer, der Verbindungseinrichtung gegenüber liegenden Seite der Vorrichtung angeordnet sein. Zum Bereitstellen der Verbindung kann die Verschlusseinrichtung 650 ein erstes Verschlusselement 651 und ein zweites Verschlusselement 652 aufweisen. Das erste Verschlusselement 651 kann als ein Verbindungsstück zwischen den Führungseinrichtungen ausgebildet sein, das im montierten Zustand der Vorrichtung über die Zellableiter verläuft. Das erste Verschlusselement 651 kann als ein, in Richtung des zweiten Verschlusselements 652 umgebogenes Endstück des zweiten Kontaktelements ausgebildet sein. Das zweite Verschlusselement 652 kann in das erste Verschlusselement 651 einrasten, um die feste Verbindung bereitzustellen.

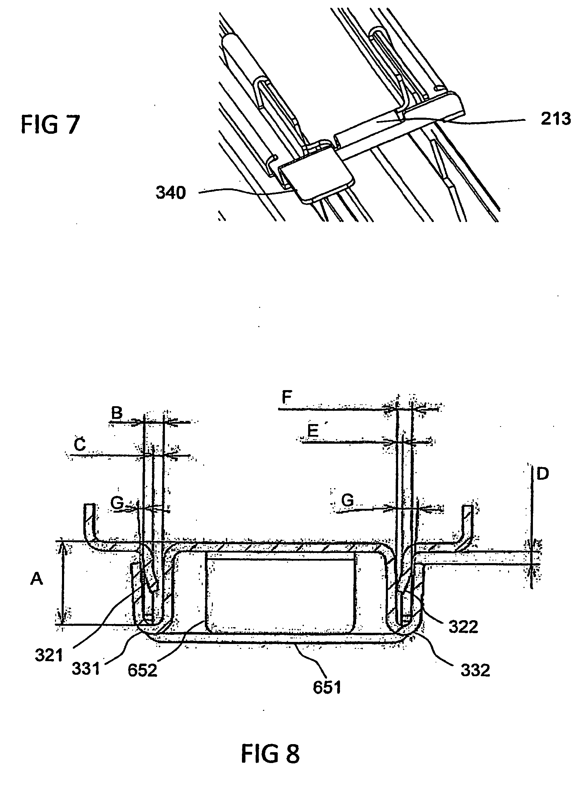

Fig. 7 zeigt eine Darstellung eines weiteren Abschnitts der erfindungsgemäßen Vorrichtung mit dem Verbindungselement 213, gemäß einem Ausführungsbeispiel der vorliegenden Erfindung. Das Verbindungselement 213 kann mittig an den Kontaktelementen angeordnet sein. Das Verbindungselement 213 kann als Scharnier zwischen den Kontaktelementen ausgebildet sein. Insbesondere kann das Verbindungselement 213 ein Filmscharnier sein. Das Verbindungselement 213 ermöglicht ein Aufklappen und Zuklappen der erfindungsgemäßem Vorrichtung. In einer zugeklappten Stellung können die Kontaktelemente parallel zueinander ausgerichtet sein und die Halteeinrichtungen können die Führungseinrichtungen und die Zellableifier umschließen. Somit kann die Montage des erfindungsgemäßen Ableiterverbinders durch Umklappen des Filmscharnieres 213 und anschließendem Verrasten erfolgen.

Fig. 8 zeigt eine Darstellung eines Schnitts durch die erfindungsgemäße Vorrichtung gemäß einem Ausführungsbeispiel der vorliegenden Erfindung. Die Führungseinrichtungen 321, 322 reichen in die Halteeinrichtungen 331, 332 hinein. Die Enden der Führungseinrichtungen 321, 322 weisen jeweils eine Biegung nach Innen auf. Ein in Fig. 8 gezeigter Abstand A kann 4,6mm, ein Abstand B kann 1 mm, ein Abstand C kann 0,5 ± 0,1mm, ein Abstand D kann 0,7mm, ein Abstand E kann 0,5 ± 0,1mm und ein Abstand F kann 0,8mm betragen. Ein Winkel G kann einen Wert von 3° aufweisen und ein Schrägung eines Endabschnitts der Halteeinrichtungen 331, 332 gegenüber den Zellableitern definieren. Die Klemmverbindung zwischen Ableiter und Verbindungselement kommt durch eine Schrägung aufgrund des Winkels G von etwa 3°-7° auf der Innenseite zustande.

Die beschriebenen Ausführungsbeispiele sind nur beispielhaft gewählt und können miteinander kombiniert werden. Die Abmessungen und Formen der beschriebenen Elemente sind ebenfalls nur beispielhaft gewählt und können durch ähnlich wirkende Elemente gleicher oder anderer Anzahl ersetzt werden und auch an anders geartete Zellableiter angepasst werden.

## Patentansprüche

1. Vorrichtung (100) zur elektrischen Verbindung von Zellableitern (102), mit folgenden Merkmalen:
einem ersten Kontaktelement (211) mit einer ersten Führungseinrichtung (321) und einer zweiten Führungseinrichtung (322), wobei die erste Führungseinrichtung ausgebildet ist, um an einem ersten Zellableiter (102) anzuliegen und die zweite Führungseinrichtung ausgebildet ist, um an einem zweiten Zellableiter (102) anzuliegen; und
einem zweiten Kontaktelement (212) mit mindestens einer ersten Halteeinrichtung (331) und mindestens einer zweiten Halteeinrichtung (332), wobei die mindestens eine erste Halteeinrichtung ausgebildet ist, um die erste Führungseinrichtung und den ersten Zellableiter zu umschließen und die mindestens eine zweite Halteeinrichtung ausgebildet ist, um die zweite Führungseinrichtung und den zweite Zellableiter zu umschließen,
wobei das zweite Kontaktelement (212) ein Flächenstück (333) aufweist, das zwischen den Zellableitern (102) angeordnet werden kann und bei der die mindestens eine erste Halteeinrichtung (331) und die mindestens eine zweite Halteeinrichtung (332) an gegenüberliegenden Seiten des Flächenstücks angeordnet sind, wobei das erste Kontaktelement (211) eine Aussparung aufweist, in die das Flächenstück (333) eingeführt werden kann und wobei die Führungseinrichtungen (321, 322) jeweils als Schienen ausgebildet sind, die parallel zu den Zellableitern (102) ausgerichtet sind, wobei die Führungseinrichtungen (321, 322) ausgebildet sind, um jeweils beide an einer Außenseite oder jeweils an einer Innenseite der Zellableiter (102) anzuliegen.

2. Vorrichtung nach Anspruch 1, bei der die Halteeinrichtungen (331, 332) jeweils als umgebogene Endstücke des zweiten Kontaktelements (212) ausgebildet sind.

3. Vorrichtung gemäß Anspruch 2, bei der die umgebogenen Endstücke ausgebildet sind, um gegenüber den Zellableitern (102) eine Schrägung zwischen 3° und 7° aufzuweisen.

4. Vorrichtung gemäß einem der vorangegangenen Ansprüche, mit einem Verbindungselement (213) zum Bereitstellen einer beweglichen Verbindung zwischen den Kontaktelementen (211, 212), wobei das Verbindungselement eine erste Stellung und eine zweite Stellung der Kontaktelemente zueinander ermöglicht, wobei die Halteeinrichtungen (331, 332) die Führungseinrichtungen (321, 322) und die Zellableiter (102) in der ersten Stellung nicht umschließen und in der zweiten Stellung umschließen.

5. Vorrichtung gemäß Anspruch 4, bei der das Verbindungselement (213) ein Filmscharnier ist.

6. Vorrichtung gemäß einem der Ansprüche 4 oder 5, mit einem im Bereich des Verbindungselements angeordneten Fortsatz (340), der sich von den Kontaktelementen (211, 212) weg erstreckt.

7. Vorrichtung gemäß einem der vorangegangenen Ansprüche, mit einer Verschlusseinrichtung (650), die ausgebildet ist, um eine feste Verbindung zwischen den Kontaktelementen (211,212) bereitzustellen, wenn die Halteeinrichtungen (331, 332) die Führungseinrichtungen (321, 322) und die Zellableiter (102) umschließen.

8. Vorrichtung gemäß Anspruch 7, bei der die Verschlusseinrichtung (650) ein erstes Verschlusselement (651) aufweist, das an dem ersten Kontaktelement (211) angeordnet ist und ein zweites Verschlusselement (652) aufweist, das an dem zweien Kontaktelement (212) angeordnet ist und wobei das erste und das zweite Verschlusselement ausgebildet sind, um eine Klemmverbindung zwischen den Kontaktelementen bereitzustellen.

## Claims

1. An apparatus (100) for the electrical connection of cell arresters (102), comprising the following features:
a first contact element (211) having a first guide device (321) and a second guide device (322), wherein the first guide device is designed to bear against a first cell arrester (102) and the second guide device is designed to bear against a second cell arrester (102); and
a second contact element (212) having at least one first holding device (331) and at least one second holding device (332), wherein the at least one first holding device is designed to surround the first guide device and the first cell arrester, and the at least one second holding device is designed to surround the second guide device and the second cell arrester,
wherein the second contact element (212) has a flat piece (333), which can be arranged between the cell arresters (102), and wherein the at least one first holding device (331) and the at least one second holding device (332) are arranged on opposite sides of the flat piece, wherein the first contact element (211) has a recess, into which the flat piece (333) can be introduced, and wherein the guide devices (321, 322) are each formed as rails that are aligned parallel to the cell arresters (102), wherein the guide devices (321, 322) are designed to both bear against an outer face or to both bear against an inner face of the cell arrester (102).

2. The apparatus according to claim 1, wherein the holding devices (331, 332) are each formed as folded-over end pieces of the second contact element (212).

3. The apparatus according to claim 2, wherein the folded-over end pieces are designed to have an inclination between 3° and 7° with respect to the cell arresters (102).

4. The apparatus according to one of the preceding claims, comprising a connection element (213) for providing a movable connection between the contact elements (211, 212), wherein the connection element enables a first position and a second position of the contact elements relative to one another, wherein the holding devices (331, 332) do not surround the guide devices (321, 322) and the cell arresters (102) in the first position and do surround them in the second position.

5. The apparatus according to claim 4, wherein the connection element (213) is a film hinge.

6. The apparatus according to one of claims 4 or 5, comprising an extension (340) in the region of the connection element, said extension extending away from the contact elements (211, 212).

7. The apparatus according to one of the preceding claims, comprising a locking device (650), which is designed to provide a fixed connection between the contact elements (211, 212) when the holding devices (331, 332) surround the guide devices (321, 322) and the cell arresters (102).

8. The apparatus according to claim 7, wherein the locking device (650) has a first locking element (651), which is arranged on the first contact element (211), and a second locking element (652), which is arranged on the second contact element (212), and wherein the first and the second locking element are designed to provide a clamping connection between the contact elements.

## Revendications

1. Dispositif (100) servant à la liaison électrique de déflecteurs d'éléments de batterie (102) et ayant les caractéristiques suivantes:
un premier élément de contact (211) comprenant un premier dispositif de guidage (321) et un deuxième dispositif de guidage (322), où le premier dispositif de guidage est conçu pour être en appui sur un premier déflecteur d'élément de batterie (102), et le deuxième dispositif de guidage est conçu pour être en appui sur un deuxième déflecteur d'élément de batterie (102); et
un deuxième élément de contact (212) comportant au moins un premier dispositif de retenue (331) et au moins un deuxième dispositif de retenue (332), où le premier dispositif de retenue au moins au nombre de un est conçu pour entourer le premier dispositif de guidage et le premier déflecteur d'élément de batterie, et le deuxième dispositif de retenue au moins au nombre de un est conçu pour entourer le deuxième dispositif de guidage et le deuxième déflecteur d'élément de batterie,
où le deuxième élément de contact (212) présente une pièce de surface (333) qui peut être disposée entre les déflecteurs d'éléments de batterie (102), dispositif dans lequel le premier dispositif de retenue (331) au moins au nombre de un et le deuxième dispositif de retenue (332) au moins au nombre de un sont disposés sur des côtés opposés de la pièce de surface, où le premier élément de contact (211) présente un évidement dans lequel peut être introduite la pièce de surface (333) et où les dispositifs de guidage (321, 322) sont configurés respectivement comme des rails qui sont orientés parallèlement aux déflecteurs d'éléments de batterie (102), où les dispositifs de guidage (321, 322) sont conçus pour être en appui tous les deux, à chaque fois, sur un côté extérieur ou bien, à chaque fois, sur un côté intérieur des déflecteurs d'éléments de batterie (102).

2. Dispositif selon la revendication 1, dans lequel les dispositifs de retenue (331, 332) sont conçus respectivement comme des parties d'extrémité recourbées du deuxième élément de contact (212).

3. Dispositif selon la revendication 2, dans lequel les parties d'extrémité recourbées sont configurées, pour présenter une inclinaison comprise entre 3° et 7° par rapport aux déflecteurs d'éléments de batterie (102).

4. Dispositif selon l'une quelconque des revendications précédentes, comprenant un élément d'assemblage (213) servant à fournir une liaison mobile entre les éléments de contact (211, 212), où l'élément d'assemblage permet une première position et une deuxième position des éléments de contact, l'un par rapport à l'autre, où les dispositifs de retenue (331, 332), dans la première position, n'entourent ni les dispositifs de guidage (321, 322) ni les déflecteurs d'éléments de batterie (102) mais les entourent dans la deuxième position.

5. Dispositif selon la revendication 4, dans lequel l'élément d'assemblage (213) est une charnière pelliculaire.

6. Dispositif selon l'une des revendications 4 ou 5, comportant un prolongement (340) disposé dans la zone de l'élément d'assemblage, lequel prolongement s'étend de façon saillante à partir des éléments de contact (211, 212).

7. Dispositif selon l'une quelconque des revendications précédentes, comprenant un dispositif de fermeture (650) qui est conçu pour fournir une liaison fixe entre les éléments de contact (211, 212) quand les dispositifs de retenue (331, 332) entourent les dispositifs de guidage (321, 322) et les déflecteurs d'éléments de batterie (102).

8. Dispositif selon la revendication 7, dans lequel le dispositif de fermeture (650) présente un premier élément de fermeture (651) qui est disposé sur le premier élément de contact (211), et présente un deuxième élément de fermeture (652) qui est disposé sur le deuxième élément de contact (212), et où le premier et le deuxième élément de fermeture sont conçus pour fournir une liaison par serrage entre les éléments de contact.
